# DEMANDE DE BREVET EUROPEEN

(11) **EP 1 470 953 A1**
(43) Date de publication de la demande: **27.10.2004**
(21) Numéro de dépôt: 04300160.1
(22) Date de dépôt: 24.03.2004
(51) Int. Cl.: B60N 2/36

(54) **Dispositif de verrouillage pour une banquette arrière de véhicule automobile**

(30) Priorité: 25.04.2003 FR 0305089
(71) Demandeur: Renault s.a.s., 92100 Boulogne Billancourt (FR)
(72) Inventeur: Lallement, Stéphane, 28130 Pierres (FR); Morelle, Frédéric, 92100 Boulogne Billancourt (FR)

(57) **Abrégé**

Dispositif (10) de verrouillage pour un dossier (12) rabattable d'une banquette (14) arrière de véhicule automobile, du type dans lequel le dossier (12) est agencé en avant d'un compartiment (16) à bagages du véhicule, est rabattable suivant une direction longitudinale (L), et comporte au moins une pince (18) solidaire de sa face (20) arrière, dont au moins un mors mobile (22) est destiné à verrouiller longitudinalement le dossier (12) en coopérant avec un organe (24) d'accrochage conforme porté par une platine (26) fixée à un élément latéral (28) de structure de caisse du compartiment (16) à bagages, caractérisé en ce que la platine (26) comporte un pêne (30) mobile qui est susceptible d'être actionné à partir du compartiment (16) à bagages pour immobiliser le mors (22) mobile de la pince (18) dans sa position de verrouillage du dossier (12) sur l'organe (24) d'accrochage.

## Description

L'invention concerne un dispositif de verrouillage pour un dossier rabattable d'une banquette arrière de véhicule automobile.

L'invention concerne plus particulièrement un dispositif de verrouillage pour un dossier rabattable d'une banquette arrière de véhicule automobile, du type dans lequel le dossier est agencé en avant d'un compartiment à bagages du véhicule, est rabattable suivant une direction longitudinale, et comporte au moins une pince solidaire de sa face arrière, dont au moins un mors mobile est destiné à verrouiller longitudinalement le dossier en coopérant avec un organe d'accrochage conforme porté par une platine fixée à un élément latéral de structure de caisse du compartiment à bagages.

On connaît de nombreux exemples de dispositifs de verrouillage de ce type.

Il s'agit pour la plupart de dispositifs dans lesquels le mors mobile est susceptible d'être actionné par l'intermédiaire d'une tringlerie à partir de la banquette du véhicule, et donc à partir de l'intérieur du véhicule.

Cette conception ne permet pas d'isoler le compartiment à bagages de l'intérieur de l'habitacle du véhicule. Ainsi, en cas d'effraction à l'intérieur de l'habitacle du véhicule, un voleur éventuel est susceptible d'atteindre le contenu du compartiment à bagages en passant par l'habitacle du véhicule.

Cette conception ne permet pas non plus de confier le véhicule à un voiturier sans craindre qu'il ne puisse avoir accès au compartiment à bagages en rabattant ladite banquettte arrière.

Il est en effet important de verrouiller la banquette dans le cas d'un véhicule de type tricorps pour lequel l'accès au compartiment à bagages ne peut se faire que par la banquette arrière ou par la porte de coffre, contrairement à un véhicule bicorps pour lequel, en tout état de cause, l'accès au compartiment à bagages peut être obtenu en ôtant la tablette située en arrière de la banquette.

L'invention remédie à cet inconvénient en proposant un dispositif du type décrit précédemment dont la décondamnation du dispositif de verrouillage ne peut être actionnée que de l'intérieur du compartiment à bagages du véhicule.

Dans ce but, l'invention propose un dispositif du type décrit précédemment, caractérisé en ce que la platine comporte un pêne mobile qui est susceptible d'être actionné à partir du compartiment à bagages pour immobiliser le mors mobile de la pince dans sa position de verrouillage du dossier sur l'organe d'accrochage.

Comme on le verra dans la suite de la présente description, ce dipositif permet avantageusement d'obtenir une condamnation du dispositif de verrouillage de coût réduit, car elle n'entraîne pas de modification dudit dispositif de verrouillage.

Cette conception est particulièrement avantageuse lorsqu'elle s'applique à une gamme de véhicules tricorps de tailles différentes, car, la décondamnation du dispositif de verrouillage étant localisée dans le compartiment à bagages, elle peut indiféremment s'aplliquer à l'un ou l'autre des véhicules concernés sans interférer avec la fabrication d'une banquette spécifique à chaque véhicule.

De ce fait, les coûts de fabrication d'un tel dispositif se trouvent d'antant plus réduits que la fabrication du dispositif est la même pour tous les véhicules tricorps de la gamme.

Selon d'autres caractéristiques de l'invention :
- la platine porte un élément d'accrochage constitué d'un fil en forme de "U" couché comportant, d'arrière en avant, deux branches parallèles d'orientation longitudinale et une branche verticale de jonction qui forme l'organe d'accrochage,
- la face arrière du dossier comporte une plaque sensiblement horizontale dans laquelle est pratiquée une fente, débouchant sur un bord de la plaque, dont les deux bords forment deux mors mobiles, ladite plaque étant mobile entre une position de déverrouillage dans laquelle la plaque est distante de la branche verticale formant l'organe d'accrochage et une position de verrouillage dans laquelle la plaque est mue vers l'élément d'accrochage de manière que la fente reçoive entre ses bords formant les mors mobiles la branche verticale formant l'organe d'accrochage pour immobiliser le dossier de la banquette,
- la plaque mobile est montée pivotante autour d'un axe vertical entre ses positions de déverrouillage et de verrouillage,
- le pêne mobile est destiné à coopérer avec le bord de la plaque pour l'immobiliser dans sa position de verrouillage,
- la platine est d'orientation sensiblement verticale et le pêne est mobile entre une position inactive dans laquelle une partie active d'extrémité du pêne est distante verticalement de la plaque et une position active dans laquelle la partie active du pêne coopère avec le bord de la plaque,
- le pêne est constitué d'un loquet monté pivotant sur la platine autour d'un axe sensiblement horizontal entre une position inclinée inactive et une position horizontale active dans laquelle l'extrémité du loquet formant la partie active du pêne coopère avec le bord de la plaque,
- le bord de la plaque comporte un ergot faisant radialement saillie sur le bord de la plaque et contre lequel la partie active du loquet est susceptible d'entrer en contact dans sa position horizontale pour immobiliser la plaque en rotation,
- le dispositif comporte des moyens de butée interposés entre le dossier de la banquette et la platine.
- les moyens de butée comportent une fourche solidaire du dossier, ouverte vers l'arrière, dont les branches sont destinées à recevoir la branche verticale formant l'organe d'accrochage,
- les moyens de butée comportent un doigt porté par la platine, d'orientation sensiblement longitudinale, qui est destiné à recevoir en appui la face arrière du dossier de la banquette,
- la platine et le pêne sont dissimulés derrière un revêtement d'habillage du compartiment à bagages, et la plaque mobile, logée dans le dossier de la banquette, est accessible à l'organe de verrouillage par l'intermédiaire d'une lumière agencée dans la face arrière du dossier,
- l'extrémité arrière du pêne est coudée et comporte une poignée de préhension accessible depuis le compartiment à bagages du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective depuis le compartiment à bagages du véhicule d'un dispositif selon un premier mode de réalisation de l'invention représenté avant que la banquette arrière ne soit rabattue,
- la figure 2 est une vue du dispositif de la figure 1 dans laquelle la banquette arrière est rabattue, le dossier étant verrouillé sur l'organe d'accrochage et le pêne n'étant pas actionné,
- la figure 3 est une vue du dispositif de la figure 1 dans laquelle la banquette arrière est rabattue, le dossier étant verrouillé sur l'organe d'accrochage et le pêne étant actionné,
- la figure 4 est une vue en perspective depuis le compartiment à bagages du véhicule d'un dispositif selon un second mode de réalisation de l'invention représenté avant que la banquette arrière ne soit rabattue,
- la figure 5 est une vue du dispositif de la figure 4 dans laquelle la banquette arrière est rabattue, le dossier étant verrouillé sur l'organe d'accrochage et le pêne n'étant pas actionné,
- la figure 6 est une vue du dispositif de la figure 4 dans laquelle la banquette arrière est rabattue, le dossier étant verrouillé sur l'organe d'accrochage et le pêne étant actionné,

Dans la description qui va suivre, des chiffres de référence identiques désignent des pièces identiques ou ayant des fonctions similaires.

On a représenté sur les figures un dispositif 10 de verrouillage pour un dossier 12 rabattable d'une banquette 14 arrière de véhicule automobile.

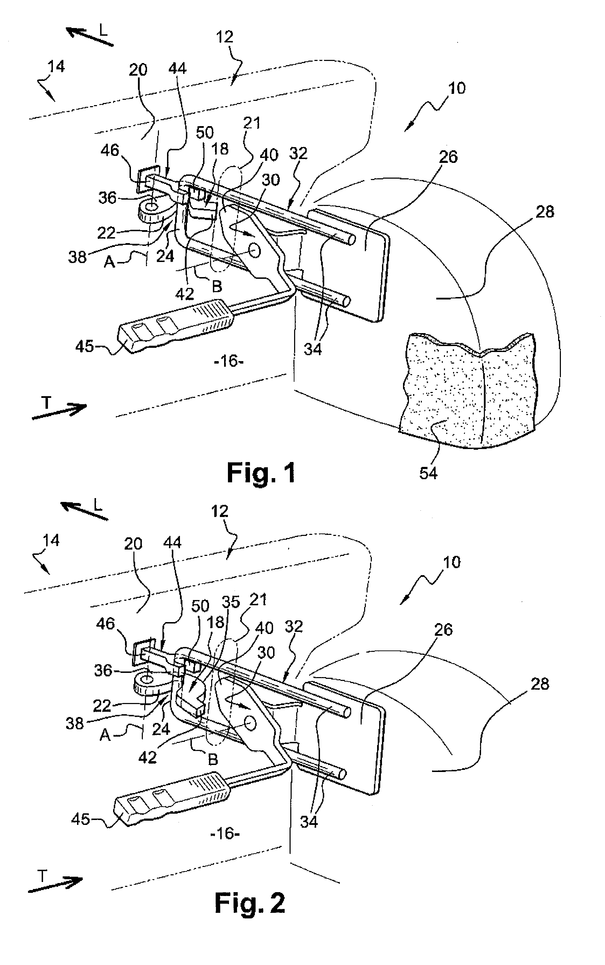

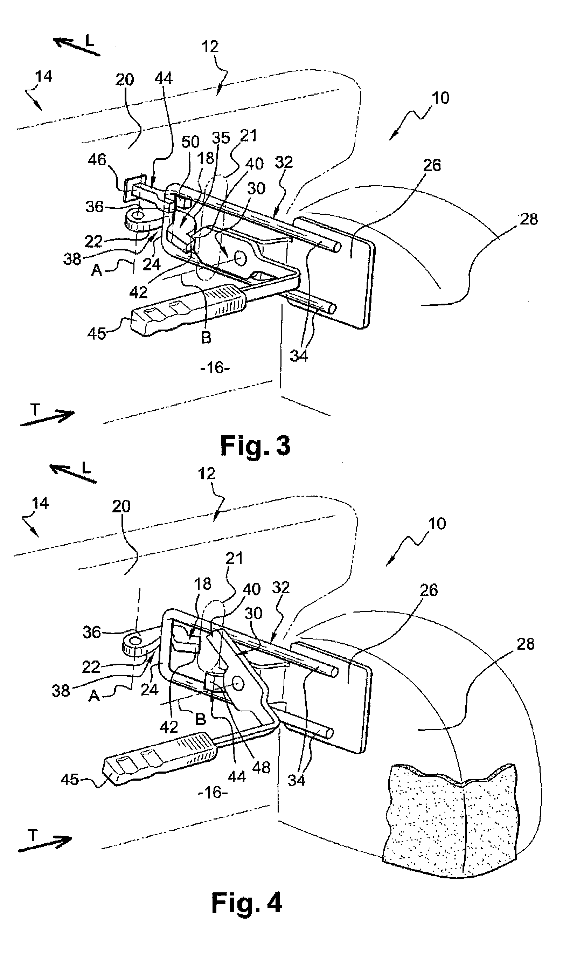

De manière connue, le dossier 12 est agencé en avant d'un compartiment 16 à bagages du véhicule, et il est rabattable, à partir de la position des figures 1 et 4 suivant une direction "L" longitudinale autour d'un axe sensiblement transversal "T". Le dossier 12 comporte au moins une pince 18 solidaire de sa face arrière 20, dont au moins un mors mobile 22 est destiné à verrouiller longitudinalement le dossier 12 en coopérant avec un organe 24 d'accrochage conforme porté par une platine 26 fixée à un élément 28 latéral de structure de caisse du compartiment 16 à bagages.

Le détail de la commande de verrouillage du mors mobile 22 sur l'organe d'accrochage 24 ne faisant pas l'objet de la présente invention, il ne sera pas décrit de façon plus explicite dans la suite de la présente description.

Dans un dispositif conventionnel (non représenté) de ce type, le mouvement du mors mobile 22 est commandé depuis la partie supérieure du dossier de la banquette 14 par l'intermédiaire d'une tringlerie interne au dossier, de sorte que le dossier 12 de la banquette 14 est susceptible d'être déverrouillé depuis l'intérieur de l'habitacle du véhicule.

Pour remédier à cet inconvénient, l'invention propose un dispositif du type décrit précédemment, caractérisé en ce que la platine 26 comporte un pêne 30 mobile qui est susceptible d'être actionné à partir du compartiment à bagages pour immobiliser le mors mobile 22 de la pince 18 dans sa position de verrouillage du dossier 12 sur l'organe 24 d'accrochage.

Dans le mode de réalisation préféré de l'invention, et de manière non limitative de celle-ci, la platine 26 porte un élément 32 d'accrochage constitué d'un fil en forme de "U" couché comportant, d'arrière en avant, deux branches 34 parallèles d'orientation longitudinale et une branche 24 verticale de jonction qui forme l'organe d'accrochage.

Pour coopérer avec cet branche 24 verticale, la face arrière 20 du dossier 12 comporte une plaque 36 sensiblement horizontale dans laquelle est pratiquée une fente 38, débouchant sur un bord 35 de la plaque 36, dont les deux bords forment deux mors mobiles 22, ladite plaque 36 étant mobile entre une position de déverrouillage, similaire à la position banquette en partie rabattue des figures 1 et 4, dans laquelle la plaque 36 est distante de la branche 24 verticale formant l'organe d'accrochage, et une position de verrouillage dans laquelle la plaque 36 est mue vers l'élément d'accrochage comme représenté aux figures 2, 3, 5, et 6 de manière que la fente 38 reçoive entre ses bords formant les mors mobiles 22 la branche verticale formant l'organe 24 d'accrochage pour immobiliser le dossier 12 de la banquette 14.

Avantageusement, la plaque 36 peut être montée, comme représenté sur les figures, dans le dossier 12 de la banquette 14. La face arrière 20 du dossier 12 comporte alors une lumière 21 par laquelle l'organe 24 d'accrochage peut pénétrer dans le dossier 12 pour coopérer avec la plaque 36.

Divers moyens peuvent être utilisés pour assurer la mobilité de la plaque 36. Toutefois, dans le mode de réalisation préféré de l'invention, la plaque 36 mobile est montée pivotante autour d'un axe "A" vertical entre ses positions de déverrouillage des figures 1 et 4 et de verrouillage des figures 2, 3, 5, et 6.

Dans cette configuration, un pêne 30 mobile est destiné à coopérer avec le bord 35 de la plaque 36 pour l'immobiliser dans sa position de verrouillage.

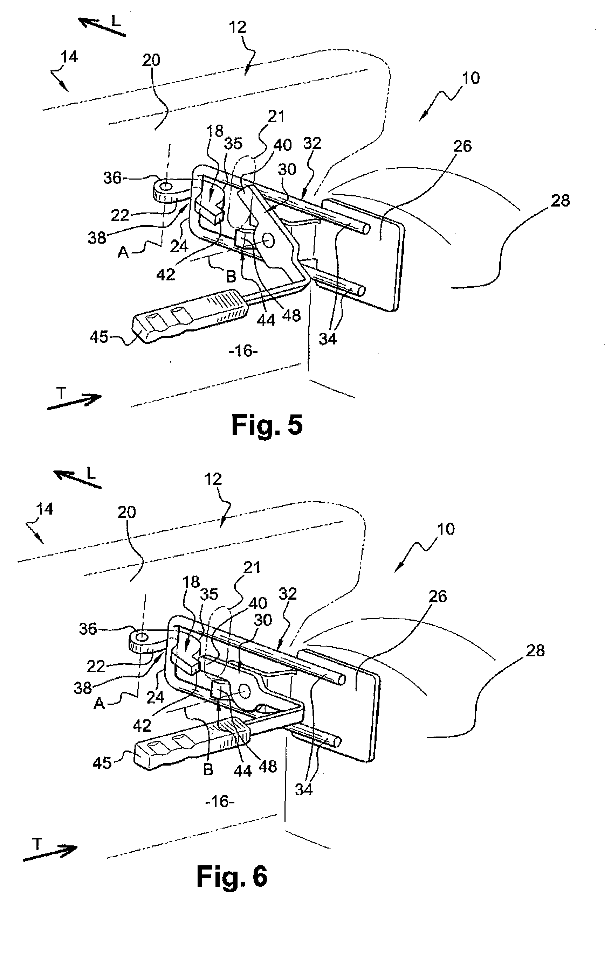

Plus particulièrement, dans le mode de réalisation préféré de l'invention, la platine 26 est d'orientation sensiblement verticale et le pêne 30 est mobile entre une position inactive, représentée aux figures 2 et 5, dans laquelle une partie active 40 d'extrémité du pêne 30 est distante verticalement de la plaque pivotante 36, et une position active, représentée aux figures 3 et 6, dans laquelle la partie active 40 du pêne 30 coopère avec le bord 35 de la plaque 36.

Différents moyens peuvent être envisagés pour assurer la mobilité du pêne 30. Notamment, celui-ci pourrait être coulissant.

Toutefois, dans le mode de réalisation préféré de l'invention, et de manière non limitative de celle-ci, le pêne 30 est constitué d'un loquet monté pivotant sur la platine 26 autour d'un axe "8" sensiblement horizontal entre une position inclinée inactive, représentée aux figures 2 et 5, et une position horizontale active, représentée aux figures 3 et 6, dans laquelle l'extrémité du loquet formant la partie active 40 du pêne 30 coopère avec le bord 35 de la plaque 36.

La partie active 40 du pêne 30 peut immobiliser le bord de la plaque 36 par tous moyens connus. Toutefois, dans le mode de réalisation préféré de l'invention, le bord 35 de la plaque 36 comporte un ergot 42 faisant radialement saillie sur le bord 35 de la plaque 36 et contre lequel la partie 40 active du loquet est susceptible d'entrer en contact dans sa position horizontale des figures 3 et 6 pour immobiliser la plaque 36 en rotation.

Dans cette configuration, le verrouillage de la banquette arrière 14 s'effectue de la manière suivante :

A partir de la position de la banquette 14 des figures 1 et 3, la face arrière 20 du dossier 12 de la banquette 14 est approchée de la platine 26. L'organe d'accrochage 24 pénètre alors dans la lumière 21.

Le dispositif 10 comporte des moyens 44 de butée interposés entre le dossier 12 de la banquette 14 et la platine 26, pour limiter la course du dossier 12.

Au cours de cette manoeuvre, le pêne 30 conformé en loquet occupe sa position inclinée inactive.

Puis la plaque 36 est pivotée de manière que sa fente 38 reçoive entre ses bords 22 formant les mors mobiles la branche verticale formant l'organe 24 d'accrochage pour immobiliser le dossier 12 de la banquette 14. Le dossier 12 est alors verrouillé longitudinalement. A tout moment le dossier 12 peut être déverrouillé librement de l'intérieur du véhicule.

Afin de condamner la fonction de verouillage, le pêne 30 conformé en loquet est rabattu vers sa position horizontale active de manière que sa partie active 40 coopère avec l'ergot 42 de la plaque 36, verrouillant ainsi celle-ci en rotation.

Le déverrouillage de la banquette arrière 14 s'effectue en ordre inverse des opérations précitées.

On remarquera que, afin de faciliter la manoeuvre du pêne 30 conformé en loquet, l'extrémité arrière dudit pêne 30 est coudée et comporte une poignée 45 de préhension accessible depuis le compartiment à bagages du véhicule.

Divers moyens peuvent être utilisés pour réaliser les moyens de butée 44 interposés entre le dossier 12 de la banquette 14 et la platine 26.

Selon un premier mode de réalisation de l'invention qui a été représenté aux figures 1 à 3, les moyens de butée comportent une fourche 46 solidaire du dossier 12, et notamment interne au dossier 12, qui est ouverte vers l'arrière, et dont les branches 50 sont destinées à recevoir la branche 24 verticale formant l'organe d'accrochage.

Selon un second mode réalisation qui a été représenté aux figures 4 à 6, les moyens 44 de butée comportent un doigt 48 porté par la platine 26, d'orientation sensiblement longitudinale, qui est destiné à recevoir en appui la face arrière 20 du dossier 12 de la banquette 14.

Afin de protéger le dispositif 10 tout en assurant un aspect esthétique convenable audit dispositif 10, la platine 26 et le pêne 30 sont dissimulés derrière un revêtement 54 d'habillage du compartiment à bagages, comme représenté sur les figures.

L'invention propose donc un dispositif de verrouillage simple et mettant le contenu d'un compartiment 16 à bagages à l'abri d'un éventuel voleur ayant pénétré dans l'habitacle du véhicule.

## Revendications

1. Dispositif (10) de verrouillage pour un dossier (12) rabattable d'une banquette (14) arrière de véhicule automobile, du type dans lequel le dossier (12) est agencé en avant d'un compartiment (16) à bagages du véhicule, est rabattable suivant une direction longitudinale (L), et comporte au moins une pince (18) solidaire de sa face (20) arrière, dont au moins un mors mobile (22) est destiné à verrouiller longitudinalement le dossier (12) en coopérant avec un organe (24) d'accrochage conforme porté par une platine (26) fixée à un élément latéral (28) de structure de caisse du compartiment (16) à bagages,
**caractérisé en ce que** la platine (26) comporte un pêne (30) mobile qui est susceptible d'être actionné à partir du compartiment (16) à bagages pour immobiliser le mors (22) mobile de la pince (18) dans sa position de verrouillage du dossier (12) sur l'organe (24) d'accrochage.

2. Dispositif (10) de verrouillage selon la revendication précédente, **caractérisé en ce que** la platine (26) porte un élément (32) d'accrochage constitué d'un fil en forme de "U" couché comportant, d'arrière en avant, deux branches (34) parallèles d'orientation longitudinale et une branche (24) verticale de jonction qui forme l'organe d'accrochage.

3. Dispositif (10) selon la revendication précédente, **caractérisé en ce que** la face arrière (20) du dossier (12) comporte une plaque (36) sensiblement horizontale dans laquelle est pratiquée une fente (38), débouchant sur un bord (35) de la plaque (36), dont les deux bords forment deux mors (22) mobiles, ladite plaque (36) étant mobile entre une position de déverrouillage dans laquelle la plaque (36) est distante de la branche (24) verticale formant l'organe d'accrochage et une position de verrouillage dans laquelle la plaque (36) est mue vers l'élément (32) d'accrochage de manière que la fente (38) reçoive entre ses bords formant les mors (22) mobiles la branche (24) verticale formant l'organe d'accrochage pour immobiliser le dossier (12) de la banquette (14).

4. Dispositif (10) selon la revendication précédente, **caractérisé en ce que** la plaque mobile (36) est montée pivotante autour d'un axe (A) vertical entre ses positions de déverrouillage et de verrouillage.

5. Dispositif (10) selon l'une des revendications 3 ou 4, **caractérisé en ce que** le pêne (30) mobile est destiné à coopérer avec le bord (35) de la plaque (36) pour l'immobiliser dans sa position de verrouillage.

6. Dispositif (10) selon la revendication précédente, **caractérisé en ce que** la platine (26) est d'orientation sensiblement verticale et **en ce que** le pêne (30) est mobile entre une position inactive dans laquelle une partie (40) active d'extrémité du pêne (30) est distante verticalement de la plaque (36) et une position active dans laquelle la partie (40) active du pêne (30) coopère avec le bord (35) de la plaque (36).

7. Dispositif (10) selon la revendication précédente, **caractérisé en ce que** le pêne (30) est constitué d'un loquet monté pivotant sur la platine (26) autour d'un axe (B) sensiblement horizontal entre une position inclinée inactive et une position horizontale active dans laquelle l'extrémité du loquet formant la partie active (40) du pêne (30) coopère avec le bord (35) de la plaque (36).

8. Dispositif (10) selon la revendication précédente, **caractérisé en ce que** le bord (35) de la plaque (36) comporte un ergot (42) faisant radialement saillie sur le bord (35) de la plaque (36) et contre lequel la partie (40) active du loquet est susceptible d'entrer en contact dans sa position horizontale pour immobiliser la plaque (36) en rotation.

9. Dispositif (10) selon l'une quelconque des revendications précédentes, **caractérisé en ce qu'**il comporte des moyens (44) de butée interposés entre le dossier (12) de la banquette (14) et la platine (26).

10. Dispositif (10) selon la revendication précédente, **caractérisé en ce que** les moyens (44) de butée comportent une fourche (46) solidaire du dossier (12), ouverte vers l'arrière, dont les branches (50) sont destinées à recevoir la branche (24) verticale formant l'organe d'accrochage.

11. Dispositif (10) selon la revendication 9, **caractérisé en ce que** les moyens de butée comportent un doigt (52) porté par la platine (26), d'orientation sensiblement longitudinale, qui est destiné à recevoir en appui la face arrière (20) du dossier (12) de la banquette (14).

12. Dispositif selon l'une quelconque des revendications précédentes, **caractérisé en ce que** la platine (26) et le pêne (30) sont dissimulés derrière un revêtement (54) d'habillage du compartiment (16) à bagages, et **en ce que** la plaque mobile (36), logée dans le dossier (12) de la banquette (14), est accessible à l'organe (24) de verrouillage par l'intermédiaire d'une lumière (21) agencée dans la face arrière (20) du dossier (12).

13. Dispositif selon l'une quelconque des revendications précédentes, **caractérisé en ce qu'**une extrémité arrière du pêne (30) est coudée et comporte une poignée (45) de préhension accessible depuis le compartiment à bagages du véhicule.
